# EUROPEAN PATENT APPLICATION

(11) **EP 4 507 149 A1**
(43) Date of publication of application: **12.02.2025**
(21) Application number: 22945514.2
(22) Date of filing: 08.09.2022
(51) Int. Cl.: H02J 3/01

(54) **ADJUSTING METHOD AND SYSTEM SUITABLE FOR TRACTION POWER SUPPLY NETWORK**

(30) Priority: 09.06.2022 CN 202210658929
(71) Applicant: Zhuzhou CRRC Times Electric Co., Ltd., Zhuzhou, Hunan 412001 (CN)
(72) Inventor: CHEN, Zhibo, Zhuzhou, Hunan 412001 (CN); ZHANG, Yi, Zhuzhou, Hunan 412001 (CN); RAO, Yiwei, Zhuzhou, Hunan 412001 (CN); LU, Jiao, Zhuzhou, Hunan 412001 (CN); CHEN, Xiang, Zhuzhou, Hunan 412001 (CN); LI, Ziran, Zhuzhou, Hunan 412001 (CN)
(74) Representative: Petraz, Gilberto Luigi
(86) International application number: PCT/CN2022/117742
(87) International publication number: WO 2023/236381

(57) **Abstract**

Provided in the present disclosure are a regulating method and system adapted to a traction power supply grid. The regulating system is applied to a traction converter system of train. In regulating system, a grid voltage that the traction power grid currently presents is acquired in real time by a grid voltage monitoring module, whether there is high-frequency resonance phenomenon is determined based on the grid voltage that the traction power grid currently presents by a central control module. If there is currently a high-frequency resonance phenomenon, control signals are sent to individual rectifier modules and/or a drive control module to eliminate the high-frequency resonance phenomenon.

## Description

### Cross-reference of related applications

The present application claims the benefit of the Chinese Patent Application No. CN202210658929.8 titled "Adjusting method and system suitable for traction power supply grid" filed on June 9, 2022, the whole content of which is incorporated herein by reference.

### Field of Technology

The present disclosure relates to the field of power electronic converter control technology, in particular to, a regulating method and system adapted to a traction power supply grid.

### Background

High-power locomotives and high-speed trains are core equipment of electrified railway, and a high-power traction converter is the "heart" of a locomotive and a high-speed train. The traction converter is installed at the bottom of the high-speed train, and has a major function of converting electrical energy between DC and AC systems and enabling control of starting, braking, and speed regulation over an AC traction motor through voltage and frequency regulation control.

AC input side of the traction converter is provided with a four-quadrant converter which is connected to a traction power grid by means of a traction transformer. Under certain specific operating conditions, characteristic frequency spectrum of a current at grid side of the locomotive overlaps with a resonance frequency of the traction power grid during certain power supply stages due to factors such as power supply capacity, line impedance, length of power supply arm, influence among multiple trains, and traction power grid coupling among trains, which results in high-frequency resonance. High-frequency resonance is extremely harmful to cause accidents such as explosion of a high-voltage lightning arrester of the locomotive, accidental activation of a protective switch of a high voltage device in the train, even in a severe case, trip triggering of a traction substation.

### Summary

The objectives of the present disclosure are to provide a regulating method and system adapted to a traction power supply grid, which can improve the above-mentioned problems.

The present disclosure provides a regulating system adapted to a traction power supply grid, which is applied to a traction converter system of train. The traction converter system of train comprises a traction transformer, a plurality of rectifier modules, a plurality of inverter modules, and a plurality of motors. The regulating system comprises: a grid voltage monitoring module, connected to an input terminal of the traction transformer and configured to acquire in real time a grid voltage that the traction power grid currently presents; a central control module, configured to determine whether high-frequency resonance occurs based on the grid voltage that the traction power grid currently presents, and send, in the case that high-frequency resonance occurs, control signals to individual rectifier modules and/or a drive control module, respectively, to eliminate the high-frequency resonance phenomenon; the drive control module, configured to send drive commands to individual motors according to the control signals so as to control power that individual motors currently use; and rectifier modules, each of which adjusts a switch frequency or turns off according to a control signal.

The present disclosure provides a regulating method adapted to a traction power supply grid, which is executed by the central control module of the regulation system adapted to the traction power supply grid as described in any one of the first aspect above. The regulating method comprises: acquiring a grid voltage that the traction power grid currently presents to calculate a proportion of harmonic content thereof and a characteristic frequency thereof; determining, in a case that the proportion of harmonic content is greater than a proportion threshold, that there is currently a high-frequency resonance phenomenon; sending, in the case that there is currently a high-frequency resonance phenomenon, rectification phase-staggering control signals as well as carrier initial values to individual rectifier modules in the traction converter system of train, so that all rectifier modules in which a characteristic frequency range of a measured grid current includes no characteristic frequency perform phase staggering.

The present disclosure provides a computer-readable storage medium, on which a computer program is stored, wherein the computer program includes program instructions which, when being executed by the processor, implements the steps of the regulating method adapted to the traction power supply grid as described above.

In order to make the above objectives, features, and advantages of the present disclosure more obvious and readily to be understood, the following embodiment are set forth in conjunction with the accompanying drawings for detailed illustration.

### Brief Description of the Drawings

In order to illustrate the technical solutions of embodiments of the present disclosure in a clearer manner, brief introduction will be given to the accompanying drawings that are necessary for the embodiments. The following figures merely illustrate certain embodiments of the present disclosure and should not be considered as limitation to the scope of the present disclosure. For those skilled in the art, other figures can be obtained based on these figures without any creative labor.
Figure 1 shows a topology of traction converters of an electric locomotive in which a DC circuit are shared thereby;
Figure 2 shows a topology of traction converters of an electric locomotive in which an independent DC circuit is owned by each, respectively;
Figure 3 is a schematic diagram of connection relationship of a regulating system adapted to a traction power supply grid provided by the present disclosure;
Figure 4 is a schematic diagram of a structure of a central control module of Figure 3; and
Figure 5 is a schematic flowchart of a regulating method adapted to a traction power supply grid provided by the present disclosure.

### Detailed Description of the Embodiments

Technical solutions of the embodiments in the present disclosure will be descripted in a clear and complete manner in conjunction with the accompanying drawings below. Apparently, the embodiments that have been described are only a part, but not all, of the embodiments of the present disclosure. Based on these embodiments in the present disclosure, all other embodiments obtained by a person of ordinary skill in the art without any creative labor should fall within the scope of protection of the present disclosure.

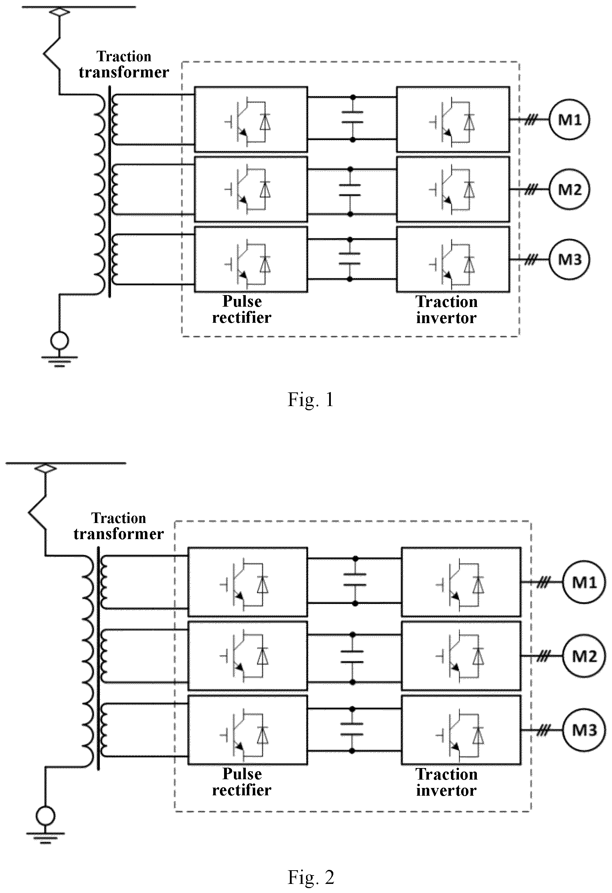

Diagrams of a topology of traction convertors are shown in Figure 1 and Figure 2, respectively. In the field of railway transit, there is generally a multiplexing operation mode. Traction convertors are one of the key components of a train, and are installed at the bottom of the train. A major function thereof is to convert the electrical energy between DC and AC systems, and enable control of starting, braking, and speed regulation over AC traction motors through voltage and frequency regulation control. In this case, a traction power grid is such a power supply circuit that specifically designed to provide electricity for an electric locomotive or an electric multiple-unit train.

Figure 1 shows a topology pattern in which an intermediate DC circuit is shared by each, and Figure 2 shows a topology pattern in which an independent shaft-control is performed for each. Regardless of the pattern, a four-quadrant converter allows for low harmonic content and high power factor for a primary current synthesized at a traction transformer by controlling a real-time phase of a secondary current of the traction transformer. If multiplexing function of four-quadrant converters is not well implemented, current distortion in the primary current of the traction transformer was caused, or more high-frequency harmonics were generated, and even in a severe case, high-frequency resonance was resulted.

The present disclosure discloses a regulating method adapted to the traction power supply grid, in which, upon detecting high-frequency resonance in the traction power grid, firstly, the maximum number of rectifier modules perform phase staggering so as to improve the high-frequency resonance in the traction power grid. In the case that high-frequency resonance still exists after maximizing the operation of the rectifier modules, switching frequencies of the rectifier modules are ascended simultaneously by taking a measure of dynamic frequency shifting while the power of motors are being decreased, so as to improve the high-frequency resonance of the traction power grid.

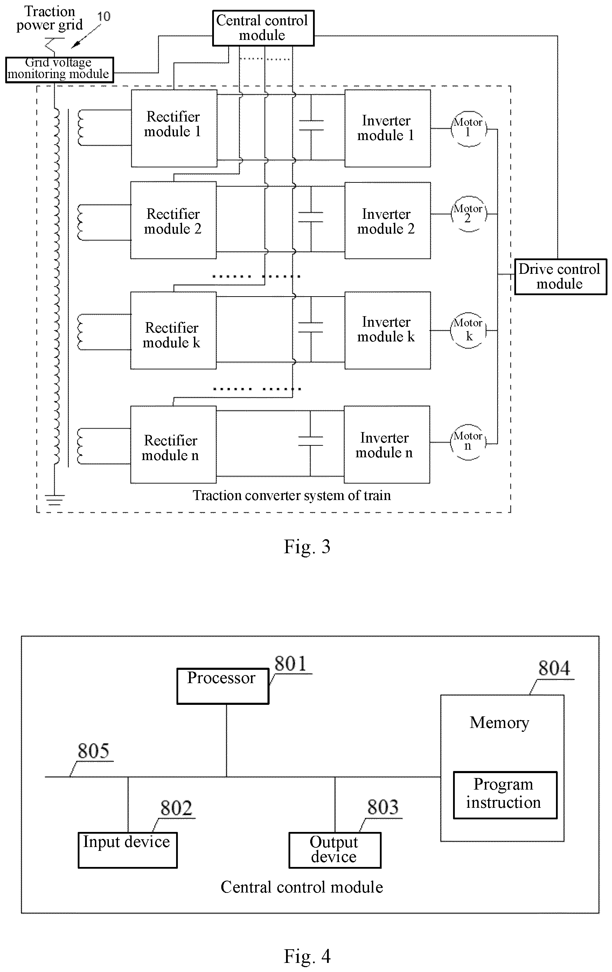

As shown in Figure 3, the present disclosure provides a regulating system adapted to the traction power supply grid. The regulating system is applied to a traction converter system of train. The traction converter system of train includes a traction transformer, a plurality of rectifier modules (n rectifier modules as shown in Figure 3), a plurality of inverter modules (n inverter modules as shown in Figure 3), and a plurality of motors (n motors as shown in Figure 3). The regulating system includes: a grid voltage monitoring module, which is connected to an input terminal of the traction transformer and is configured to acquire in real time a grid voltage that the traction power grid currently presents; a central control module, which is configured to determine whether high-frequency resonance occurs based on the grid voltage that the traction power grid currently presents, and sent control signals to individual rectifier modules and/or a drive control module, respectively, in the case that high-frequency resonance occurs so as to eliminate the high-frequency resonance phenomenon; the drive control module, which is configured to send drive commands to individual motors according to the control signals so as to control the power that individual motors currently use; and rectifier modules, each of which adjusts a switch frequency or turns off according to a control signal.

The present disclosure provides a regulating system adapted to the traction power supply grid. The regulating system is applied to a traction converter system of train. The regulating system acquires in real time a grid voltage that the traction power grid currently presents by the grid voltage monitoring module. The central control module determines whether there is high-frequency resonance phenomenon based on the grid voltage that the traction power grid currently presents. If there is currently a high-frequency resonance phenomenon, control signals are sent to individual rectifier modules and/or the drive control module to eliminate the high-frequency resonance phenomenon. This regulating system can avoid occurrence of high-frequency resonance, or can exert control in time even if high-frequency resonance has already occurred so as to prevent an accident from escalating, thereby enhancing adaptability of a train to operate in different power supply stages.

In this case, a rectifier module includes a four-quadrant converter, and the traction converter system of train includes multiplexing of four-quadrant converters.

As shown in Figure 4, the central control module includes a processor 801, an input device 802, an output device 803, and a memory 804. The processor 801, input device 802, output device 803, and memory 804 are connected with each other, for example, through a bus 805. The memory is configured to store a computer program which includes program instructions. The processor is configured to call the program instructions to carry out the steps of determination on high-frequency resonance phenomenon and elimination of the high-frequency resonance phenomenon.

The processor can be a Central Processing Unit (CPU), which can also be other general-purpose processors, Digital Signal Processor (DSP), Application Specific Integrated Circuit (ASIC), Field Programmable Gate Array (FPGA) or other programmable logic devices, discrete gate or transistor logic devices, discrete hardware components, etc. A general-purpose processor can be a microprocessor or any conventional processor and the like.

The memory may include read-only memory and random access memory, and can provide instructions and data to the processor. A portion of the memory may further include non-volatile random access memory. For example, the memory can further store information about device types.

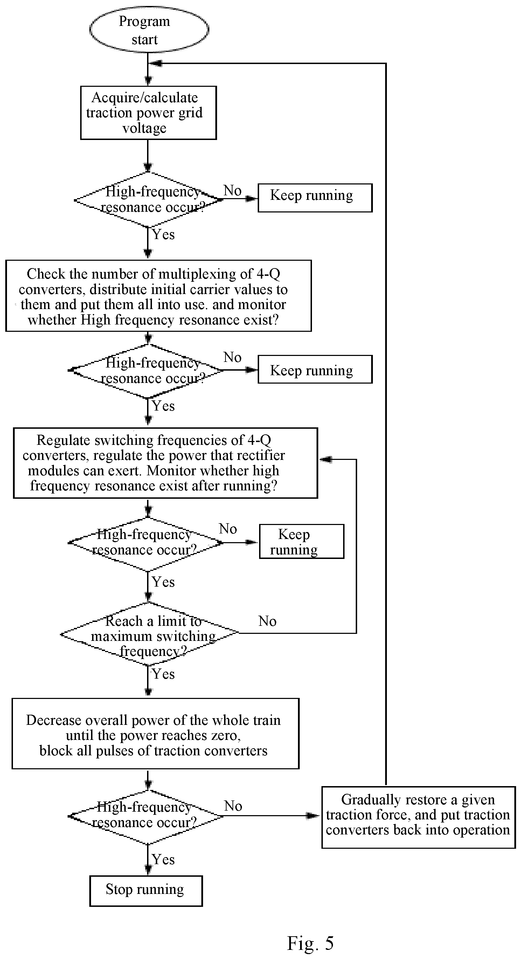

As shown in Figure 5, the present disclosure provides a regulating method adapted to the traction power supply grid. The regulating method is executed by the central control module of the regulating system adapted to the traction power supply grid as described above. The regulating method may include steps 110 to 130.

In step 110, a grid voltage that the traction power grid currently presents is acquired to calculate a proportion of harmonic content thereof and a characteristic frequency thereof.

After the grid voltage that the traction power grid currently presents is acquired, the proportion of harmonic content and the characteristic frequency in the grid voltage currently presented can be calculated through Fast Fourier Transform (FFT).

In step 120, in the case that the proportion of harmonic content is greater than a proportion threshold, it is determined that there is currently a high-frequency resonance phenomenon.

In this case, the proportion threshold can be set by a person skilled in the art according to a specific situation, with a purpose of screening high-frequency resonance. Generally, it can be set to 18%.

In step 130, in the case that there is currently a high-frequency resonance phenomenon, rectification phase-staggering control signals as well as carrier initial values are sent to individual rectifier modules in the traction converter system of train, so that all rectifier modules in which a characteristic frequency range of a measured grid current includes no characteristic frequency perform phase staggering.

In the step 130, a rectification phase-staggering control signal includes a turn-on control signal and a turn-off control signal. The step 130 may include steps 131 to 132.

In step 131, a turn-off control signal is sent to a rectifier module in which a characteristic frequency range of a measured grid current includes the characteristic frequency, and turn-on control signals are sent to other rectifier modules in the traction converter system of train.

In step 132, initial carrier values are sent to the individual rectifier modules in which a characteristic frequency range of a measured grid current includes no characteristic frequency according to the following formula: *Aₖ =* (*k -* 1)*π* / *n*, where *Aₖ* represents an initial carrier value of the k*th* rectifier module, and *n* represents the number of rectifier modules in the traction converter system of train.

In this case, the rectifier module in which a characteristic frequency range of a measured grid current includes no characteristic frequency is the one causing no high-frequency resonance, that is, the rectifier module that is qualified to be put into use.

Generally, the number of four-quadrant modules in the entire locomotive in an operating status varies in relation to light and heavy load conditions of the locomotive, and some four-quadrant modules are isolated under certain fault conditions. Therefore, after high-frequency resonance occurs, the currently available number of multiplexing of the four-quadrant converters in the entire locomotive is determined immediately. Regardless of whether it is in the light or heavy load condition, those four-quadrant convertor modules that is qualified to be put into use will be all put into use, and then perform phase staggering according to the number of multiplexing to be used. A rule of phase staggering is set based on a modulation method as well as positions where individual multiplexing locate across the entire locomotive.

The present disclosure provides a regulating method adapted to the traction power supply grid, in which, upon detecting high-frequency resonance in the traction power grid, regardless of whether it is in a light or heavy load condition, those rectifier modules in the traction converter system of train that is qualified to be put into use are all put into use, and perform phase staggering according to the number of multiplexing to be used, so as to improve the high-frequency resonance phenomenon in the traction power grid.

In the embodiment of the present disclosure, turning to refer to Figure 5, after sending rectification phase-staggering control signals and initial carrier values to individual rectifier modules in the traction converter system of train, the method may further include step 140.

In step 140, in the case that there is currently a high-frequency resonance phenomenon, up-conversion control signals are sent to individual rectifier modules in the traction converter system of train to ascend switching frequencies of the individual rectifier modules; and deceleration control signals are sent to individual drive control modules so that the drive control modules can control respective related motors to reduce the power.

In the step 140, an up-conversion control signal involves multi-level up-conversion control signals, and each level of up-conversion control signal corresponds to a switching frequency range. The up-conversion control signals are sent to individual rectifier modules in the traction converter system of train to ascend witching frequencies of the individual rectifier modules, which may include steps 141 to 142.

In step 141, a switching frequency that a rectifier module currently uses is acquired.

In step 142, when the switching frequency currently used is within a switching frequency range of the *ith* level, an up-conversion control signal of the (i+1)*th* level is sent to the rectifier module to ascend the currently used switching frequency to be within a switching frequency range of the (i+1)*th* level. In this case, the minimum value of the switching frequency range of the (i+1)*th* level is greater than the maximum value of the switching frequency range of the *ith* level.

A deceleration control signal includes multi-level deceleration control signals, each level of deceleration control signal corresponds to a motor power range. Deceleration control signals are sent to individual drive control modules to so that the drive control modules can control respective related motors to reduce the power, which may include steps 143 to 144.

In step 143, the power that a motor currently uses is acquired.

In step 144, when the power currently used is within a motor power range of the j*th* level, a deceleration control signal of the *(j-1)th* level is sent to the motor to reduce the power currently used to a motor power range of the *(j-1)th* level. In this case, the maximum value of the motor power range of the *(j-1)th* level is less than the minimum value of the motor power range of the *ith* level.

In the regulating method adapted to the traction power supply grid provided by the present disclosure, if the high-frequency resonance phenomenon still exists after maximizing the operation of the rectifier modules, it is indicated that it is insufficient for the locomotive to solve this problem by maximizing the operation of the four-quadrant converter modules, so that further adjustment can be made by regulating the switching frequencies of the four-quadrant converters. Switching frequencies of the rectifier modules are ascended simultaneously by taking a measure of dynamic frequency shifting while the power of motors are being decreased, so as to improve the high-frequency resonance of the traction power grid.

In an embodiment of the present disclosure, the method may further include that: when the switching frequency currently used reaches a maximum frequency threshold, a frequency holding signal is sent to the rectifier module to maintain the rectifier module at the currently used switching frequency; and a deceleration control signal is continually sent to the drive control module until the power that the motor currently used decreases to zero.

The train is running at a power of the maximum frequency threshold, at the time of which the power is already relatively low and a speed of the locomotive is relatively low. At this time, if high-frequency resonance continues to occur in the traction power grid, then the overall power of the entire train is reduced further on the basis of the maximum frequency threshold being maintained, until the overall power reaches zero. At this time, the power of the locomotive has been cut off and no harmonics is injected into the power grid any longer.

In an embodiment of the present disclosure, after the deceleration control signal is continually sent to the drive control module until the power that the motor currently used decreases to zero, the method may further include that: in the case that there is currently a high-frequency resonance phenomenon, an alarm signal is sent to control center of the train to indicate that there has been a high-frequency resonance phenomenon that is not attributed to the train discussed.

As the power of a motor of the train is zero, a related traction converter is in a pulse blocking state. Monitoring continually works on background harmonics of the traction power grid. If high-frequency resonance still exists at this time, then such high-frequency resonance is not attributable to the train discussed. The central control module reports information outwards to prompt a driver of the actual situation of the power grid.

A person of ordinary skill in the art can be aware that various exemplary units and algorithm steps that are described in conjunction with the embodiments disclosed in the present disclosure can be implemented in electronic hardware, computer software, or a combination of the both. In order to clearly illustrate the interchangeability of hardware and software, various exemplary composition and steps have been described in the above description according to their function universality. Whether these functions are implemented by means of hardware or software depends on a specific application and design constraints of the technical solution. A person of expert skill in the art can use different methods to achieve the described functionality with respect to individual specific applications. However, implementation in such manners should not be considered going beyond the scope of the present disclosure.

In several embodiments provided by the present disclosure, the disclosed terminal devices and methods can be implemented in other ways. For example, the device embodiments described above are only illustrative. For example, division of these above units merely refers to logical function division, there can be other division methods in practical implementation, that is, for example, multiple units or components may be combined or integrated into another system, or some features may be ignored or not executed. In addition, mutual coupling, direct coupling or communication connection that has been shown or discussed can be indirect coupling or communication connection by means of some interfaces, devices or units, or can be connection in a manner of electrical, mechanical or other forms.

The units described above as separate components may or may not be physically separated, and the components displayed as a unit may or may not be a physical unit, that is, they can be either located in one place or distributed across multiple network units. Some or all of the units can be selected according to actual needs to achieve the objectives of the embodiments of the present disclosure.

In addition, various functional units in the embodiments of the present disclosure can be integrated into one processing unit, can physically exist separately by each, or can have two or more units integrated into one unit. The integrated units mentioned above can be implemented in the form of hardware, or in the form of software functional units.

If an integrated unit mentioned above is implemented in the form of a software functional unit and is sold or used as an independent product, then it can be stored in a computer-readable storage medium. The technical solution of the present disclosure may be essentially embodied in the form of a software product; alternatively, the part of the technical solution that contributes to the existing technology, or all or part of the technical solution can be embodied in the form of a software product. The software product is stored in a storage medium and includes several instructions to enable a computer device (which can be a personal computer, server, or network device, etc.) to perform all or part of the steps of the methods according to the various embodiments of the present disclosure. The storage medium mentioned above may include: USB flash drive, portable hard drive, Read-Only Memory (ROM), Random Access Memory (RAM), disks or CDs, and various medium that can store program codes.

The wordings "first", "second", "the first" or "the second" used in various embodiments of the present disclosure may be used to define various components regardless of an order and/or importance, and such wordings construct no limitation to the related components. These wordings above are only intended to distinguish a component from other components. For example, a first user device and a second user device represent different user devices, although each of them is equally a user device. For example, without departing from the scope of the present disclosure, a first element may be referred to as a second element, and similarly, the second element may be referred to as the first element.

When a component (e.g. a first component) is so said "(operatively or communicatively) coupled with" or "(operatively or communicatively) coupled to" another component (e.g. a third component) or "connected to" another component (e.g. a third component), it should be understood that the component is directly connected to the other component, or indirectly connected to the other component via another component (e.g. a third component). When a component (e.g. a first component) is so said "directly connected" or "directly coupled" to the other component (a second component), it means that no component (e.g. a third component) is inserted between the two.

The above description involves only explanation of the exemplary embodiments and the technical principle that is applied. A person skilled in the art should understand that the scope of the invention related to in the present disclosure is not limited to the technical solution composed of a specific combination of the above technical features, and should also cover other technical solutions composed of any combination of the above technical features or their equivalent features without departing from the above concept of invention, for example, a technical solution composed by replacing the above features with those technical features having similar functions as that disclosed (but not limited thereto) in the present disclosure.

The above description is only illustrative examples of the present disclosure and is not intended to construct a limitation thereto. For those skilled in the art, various modifications and variations can be made to the present disclosure. Any modifications, equivalent substitutions, improvements and the like that are made within the spirit and principles of the present disclosure shall be included within the scope of protection of the present disclosure.

The above embodiments illustrate only several implementations of the present disclosure with a manner of description of more specific and detailed, which, however, should not be considered as limitation to the scope of the present disclosure. It should be noted for the person of ordinary skill in the art that several modifications and improvements can be made without departing from the proposals of the present disclosure, all of which fall within the scope of protection of the present disclosure. Therefore, the scope of protection of the present disclosure shall be based on the attached claims.

## Claims

1. A regulating system adapted to a traction power supply grid, **characterized in that** the regulating system is applied to a traction converter system of train, the traction converter system of train comprises a traction transformer, a plurality of rectifier modules, a plurality of inverter modules, and a plurality of motors, the regulating system comprises:
a grid voltage monitoring module, connected to an input terminal of the traction transformer and configured to acquire in real time a grid voltage that the traction power grid currently presents;
a central control module, configured to determine whether there is high-frequency resonance based on the grid voltage that the traction power grid currently presents, and send, in a case that there is high-frequency resonance, control signals to individual rectifier modules and/or a drive control module, respectively, to eliminate the high-frequency resonance phenomenon;
the drive control module, configured to send drive commands to the individual motors according to the control signals so as to control power that individual motors currently use; and
the rectifier modules, each of which adjusts a switch frequency or turns off according to a control signal.

2. The regulating system adapted to a traction power supply grid according to claim 1, **characterized in that** each of the rectifier modules comprises a four-quadrant converter, and the traction converter system of train comprises multiplexing of the four quadrant converters.

3. The regulating system adapted to a traction power supply grid according to claim 1, **characterized in that** the central control module comprises a processor, an input device, an output device, and a memory, wherein the processor, the input device, the output device, and the memory are connected with each other, wherein the memory is configured to store a computer program which includes program instructions, the processor is configured to call the program instructions to perform a step of determining whether there is a high-frequency resonance phenomenon and a step of eliminating the high-frequency resonance phenomenon.

4. A regulating method adapted to a traction power supply grid, which is executed by the central control module of the regulating system adapted to the traction power supply grid according to any one of claims 1 to 3, **characterized in that** the method comprises:
acquiring a grid voltage that the traction power grid currently presents to calculate a proportion of harmonic content thereof and a characteristic frequency thereof;
determining, in a case that the proportion of harmonic content is greater than a proportion threshold, that there is currently a high-frequency resonance phenomenon; and
sending, in the case that there is currently a high-frequency resonance phenomenon, rectification phase-staggering control signals as well as carrier initial values to individual rectifier modules in the traction converter system of train, so that all rectifier modules in which a characteristic frequency range of a measured grid current includes no characteristic frequency perform phase staggering.

5. The regulating method adapted to a traction power supply grid according to claim 4, **characterized in that** a rectification phase-staggering control signal includes a turn-on control signal and a turn-off control signal;
sending rectification phase-staggering control signals as well as carrier initial values to the individual rectifier modules in the traction converter system of train, so that all rectifier modules in which a characteristic frequency range of a measured grid current includes no characteristic frequency perform phase staggering comprises:
sending a turn-off control signal to a rectifier module in which a characteristic frequency range of a measured grid current includes a characteristic frequency, and sending turn-on control signals to other rectifier modules in the traction converter system of train; and
sending the initial carrier values to the individual rectifier modules in which a characteristic frequency range of a measured grid current includes no characteristic frequency according to a following formula: *Aₖ =* (*k* -1)*π* / *n,* where *Aₖ* represents an initial carrier value of a k*th* rectifier module, and *n* represents a quantity of rectifier modules in the traction converter system of train.

6. The regulating method adapted to a traction power supply grid according to claim 4, **characterized in that** after sending rectification phase-staggering control signals as well as carrier initial values to individual rectifier modules in the traction converter system of train, the method further comprises:
in the case that there is currently a high-frequency resonance phenomenon,
sending up-conversion control signals to the individual rectifier modules in the traction converter system of train to ascend switching frequencies of the individual rectifier modules; and
sending deceleration control signals to individual drive control modules so that the drive control modules control the individual motors to reduce the power.

7. The regulating method adapted to a traction power supply grid according to claim 6, **characterized in that** an up-conversion control signal involves multi-level up-conversion control signals, and each level of the up-conversion control signal corresponds to a switching frequency range;
sending up-conversion control signals to the individual rectifier modules in the traction converter system of train to ascend switching frequencies of the individual rectifier modules comprises:
acquiring a switching frequency that a rectifier module currently uses; and
sending, when the switching frequency currently used is within a switching frequency range of a i*th* level, an up-conversion control signal of a (i+1)*th* level to the rectifier module to ascend the switching frequency currently used to be within a switching frequency range of a (i+1)*th* level, wherein, a minimum value of the switching frequency range of the (i+1)*th* level is greater than a maximum value of the switching frequency range of the *ith* level;
a deceleration control signal includes multi-level deceleration control signals, each level of deceleration control signal corresponds to a motor power range;
sending deceleration control signals to individual drive control modules so that the drive control modules control the individual motors to reduce the power comprises:
acquiring a power that a motor currently uses; and
sending, when the power currently used is within a motor power range of a *jth* level, a deceleration control signal of a *(j-1)th* level to the motor to reduce the power currently used to a motor power range of a *(j-1)th* level, wherein a maximum value of the motor power range of the *(j-1)th* level is less than a minimum value of the motor power range of the *ith* level.

8. The regulating method adapted to a traction power supply grid according to claim 7, **characterized in that** the method further comprises:
sending, when the switching frequency currently used reaches a maximum frequency threshold, a frequency holding signal to the rectifier module to maintain the rectifier module at the switching frequency currently used; and continually sending a deceleration control signal to the drive control module until the power that the motor currently used decreases to zero.

9. The regulating method adapted to a traction power supply grid according to claim 8, **characterized in that** after continually sending a deceleration control signal to the drive control module until the power that the motor currently used decreases to zero, the method further comprises:
in the case that there is currently a high-frequency resonance phenomenon,
sending an alarm signal to a control center of train to indicate that there has been a high-frequency resonance phenomenon that is not attributed to said train.

10. A computer-readable storage medium, **characterized in that**
the computer-readable storage medium stores a computer program, the computer program includes program instructions which, when being executed by a processor, implements the regulating method according to any one of claims 4 to 9.
